(19)

**Europäisches Patentamt**
**European Patent Office**
**Office européen des brevets**

(11)  **EP 4 390 897 B1**

(12)  **EUROPEAN PATENT SPECIFICATION**

(45) Date of publication and mention
of the grant of the patent:
**29.10.2025   Bulletin 2025/44**

(21) Application number: **23208515.9**

(22) Date of filing: **08.11.2023**

(51) International Patent Classification (IPC):
***G08G 5/00*** *(2025.01)*

(52) Cooperative Patent Classification (CPC):
**G08G 5/26; G08G 5/22; G08G 5/54**

(54) **SYSTEM AND METHOD FOR CONTROLLING LANDING OF AIR MOBILITY VEHICLE**

SYSTEM UND VERFAHREN ZUR STEUERUNG DER LANDUNG EINES LUFTFAHRZEUGS

SYSTÈME ET PROCÉDÉ DE COMMANDE D'ATTERRISSAGE D'UN VÉHICULE DE MOBILITÉ
AÉRIENNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **21.12.2022   KR 20220180757**

(43) Date of publication of application:
**26.06.2024   Bulletin 2024/26**

(73) Proprietors:
• **HYUNDAI MOTOR COMPANY**
  **Seoul 06797 (KR)**
• **Kia Corporation**
  **Seocho-gu**
  **Seoul 06797 (KR)**

(72) Inventors:
• **KIM, Hyun Jin**
  **Hwaseong-si, Gyeonggi-do 18280 (KR)**
• **KIM, Ho Jun**
  **Hwaseong-si, Gyeonggi-do 18280 (KR)**
• **LEE, Joo Hyun**
  **Hwaseong-si, Gyeonggi-do 18280 (KR)**

(74) Representative: **Viering, Jentschura & Partner
mbB
Patent- und Rechtsanwälte
Am Brauhaus 8
01099 Dresden (DE)**

(56) References cited:
**WO-A1-2021/228107      CN-A- 113 920 784
CN-A- 114 721 441       KR-A- 20190 110 499**

Description

## CROSS-REFERENCE TO RELATED APPLICATIONS

This application claims the benefit of Korean Patent Application No. 10-2022-0180757, filed on December 21, 2022.

## TECHNICAL FIELD

The present disclosure relates to a system and method for controlling landing of an air mobility vehicle.

## BACKGROUND

Recently, a technology for determining a position of an air mobility vehicle and inducing landing of the air mobility vehicle based on a global navigation satellite system (GNSS) has been developed. However, the global navigation satellite system has a low positioning accuracy of several meters and thus has improved in positioning accuracy by applying a satellite navigation augmentation system such as RTK (Real Time Kinematic) GPS together. Nevertheless, GNSS signals are vulnerable to jamming threats, and there are still problems such as multipath errors caused by signal reflections from buildings in urban environments.

Accordingly, a technology for providing location information based on radio positioning such as TOA (Time Of Arrival) around a landing site when an air mobility vehicle lands is being developed, but precise time synchronization between the air mobility vehicle and the landing site is required for distance measurement, and a separate communication device for supporting the time synchronization is also required to be mounted on the air mobility vehicle, resulting in limitations in proceeding with the landing procedure of the air mobility vehicle.

CN 114 721 441 A discloses a multi-source fusion vehicle-mounted unmanned aerial vehicle autonomous landing control method. Mature RTK positioning and visual positioning are fused, and a complex information fusion algorithm is abandoned; the target position credibility of the RTK positioning module and the visual positioning module is compared, and the target position information of the positioning module with higher target position credibility is selected as a navigation information source for controlling the autonomous landing of the vehicle-mounted unmanned aerial vehicle. Furthermore, a multi-source fusion vehicle-mounted unmanned aerial vehicle autonomous landing control device is disclosed.

CN 113 920 784 A discloses a communication method and device and a storage medium. The method is applied to a target aircraft flying in an aviation area, and the aviation area comprises at least one of a surpassing channel, a driving channel and a transition channel. The flight speeds corresponding to the surpassing channel, the driving channel and the transition channel are sequentially reduced; the method comprises the following steps of: sending flight information to a control platform; the control platform is used for managing at least one aircraft flying in the aviation area, and the at least one aircraft comprises a target aircraft; the flight information is used for determining capacity information corresponding to at least one of the surpassing channel, the driving channel and the transition channel; and in response to an instruction sent by the control platform, executing a corresponding flight action.

KR 2019 0110499 A discloses an unmanned aerial vehicle to identify a vacant space of a station. It allows the station to identify a vacant space of the station, determines whether the unmanned aerial vehicle can land on the vacant space, and induces landing. A drone of the present invention can be connected with an artificial intelligence module, an autonomous guided vehicle, a robot, an augmented reality (AR) device, a virtual reality (VR) device and a 5G service.

## SUMMARY

Embodiments of the present disclosure can solve problems occurring in the prior art while advantages achieved by the prior art are maintained intact.

According to an embodiment of the present disclosure, a system according to claim 1 is disclosed. The system may include an air mobility vehicle that transmits a radio signal required to determine a relative position when receiving a signal indicating that landing on a landing pad is permitted, an airport that receives the radio signal, determines the relative position of the air mobility vehicle, and transmits a result of the determination of the relative position, and a service provider that transmits a command for allowing the air mobility vehicle to land vertically to the air mobility vehicle when it is determined that the air mobility vehicle is located within a predetermined range from the landing pad based on the result of the determination of the relative position.

According to an embodiment, the service provider may receive a signal requesting landing permission from the air mobility vehicle and transmit the signal indicating that landing is permitted to the air mobility vehicle when the air mobility vehicle is capable of landing based on information of the air mobility vehicle.

According to an embodiment, the service provider may request determination of whether the landing pad is available from the airport after transmitting to the air mobility vehicle the signal indicating that landing is permitted and receive a result of determination of whether the landing pad is available from the airport.

According to an embodiment, the service provider may request the relative position of the air mobility vehicle with respect to the landing pad from the airport when it is determined that the landing pad is available based on the result of the determination.

According to an embodiment, the airport may include a plurality of receivers (N receivers) each for receiving the radio signal.

According to an embodiment, the airport may set one of the plurality of receivers (N receivers) as a reference receiver and calculate a distance between the reference receiver and the air mobility vehicle.

According to an embodiment, the airport may calculate a second distance to an N-th distance respectively corresponding to distances between the air mobility vehicle and receivers other than the reference receiver among the plurality of receivers (N receivers).

According to an embodiment, the airport may calculate a first value that is a difference between the first distance and the second distance to an M-th value that is a difference between the first distance and the N-th distance and may determine the relative position based on the first value to the M-th value.

According to an embodiment, the airport may transmit a landing completion message to the service provider and the airport when it is determined that the air mobility vehicle has landed on the landing pad and has moved to a boarding field.

According to an embodiment, the airport may receive the landing completion message and control a towing vehicle such that the air mobility vehicle is moved to the boarding field when the landing completion message is received and a request message requesting movement is received from the air mobility vehicle.

According to an embodiment of the present disclosure, a method for controlling landing of an air mobility vehicle according to claim 11 is disclosed. The method may include transmitting, by an air mobility vehicle, a radio signal required to determine a relative position when receiving a signal indicating that landing on a landing pad is permitted, receiving, by an airport, the radio signal, determining the relative position of the air mobility vehicle, and transmitting a result of the determination of the relative position, and transmitting, by a service provider, a command for allowing the air mobility vehicle to land vertically to the air mobility vehicle when it is determined that the air mobility vehicle is located within a predetermined range from the landing pad based on the result of the determination of the relative position.

According to an embodiment, the method may further include receiving, by the service provider, a signal requesting landing permission from the air mobility vehicle and transmitting the signal indicating that landing is permitted to the air mobility vehicle when the air mobility vehicle is capable of landing based on information of the air mobility vehicle.

According to an embodiment, the method may further include, after transmitting the signal indicating that landing is permitted, requesting determination of whether the landing pad is available from the airport and receiving a result of determination of whether the landing pad is available from the airport.

According to an embodiment, the method may further include requesting the relative position of the air mobility vehicle with respect to the landing pad from the airport when it is determined that the landing pad is available based on the result of the determination.

According to an embodiment, the airport may receive the radio signal through a plurality of receivers (N receivers).

According to an embodiment, the method may further include setting, by the airport, one of the plurality of receivers (N receivers) as a reference receiver and calculating a distance between the reference receiver and the air mobility vehicle.

According to an embodiment, the method may further include calculating, by the airport, a second distance to an N-th distance respectively corresponding to distances between the air mobility vehicle and receivers other than the reference receiver among the plurality of receivers (N receivers).

According to an embodiment, the method may further include calculating, by the airport, a first value that is a difference between the first distance and the second distance to an M-th value that is a difference between the first distance and the N-th distance and determining, by the airport, the relative position based on the first value to the M-th value.

According to an embodiment, the method may further include transmitting, by the air mobility vehicle, a landing completion message to the service provider and the airport when it is determined that the air mobility vehicle has landed on the landing pad and moving to a boarding field.

According to an embodiment, the method may further include controlling, by the airport, a towing vehicle such that the air mobility vehicle is moved to the boarding field when the landing completion message is received and a request message requesting movement is received from the air mobility vehicle.

## BRIEF DESCRIPTION OF THE DRAWINGS

The above and other objects, features, and advantages of embodiments of the present disclosure will be more apparent from the following detailed description taken in conjunction with the accompanying drawings, in which:

FIG. 1 is a diagram showing the configuration of a system for controlling landing of an air mobility vehicle according to an embodiment of the present disclosure;

FIG. 2 is a diagram schematically showing a system for controlling landing of an air mobility vehicle according to an embodiment of the present disclosure;

FIG. 3 is a diagram showing a configuration of an air mobility vehicle according to an embodiment of the present disclosure;

FIG. 4 is a diagram showing a configuration of an airport according to an embodiment of the present disclosure;

FIG. 5 is a diagram schematically showing an airport and an air mobility vehicle according to an embodiment of the present disclosure;

FIG. 6 is a diagram schematically showing a method of calculating a position of an air mobility vehicle according to an embodiment of the present disclosure;

FIG. 7 is a diagram showing a configuration of a service provider according to an embodiment of the present disclosure;

FIG. 8 is a flowchart illustrating a method for controlling the landing of an air mobility vehicle, including operation of an air mobility vehicle according to an embodiment of the present disclosure;

FIG. 9 is a flowchart illustrating a method for controlling the landing of an air mobility vehicle, including operation of an airport according to an embodiment of the present disclosure;

FIG. 10 is a flowchart illustrating a method for controlling the landing of an air mobility vehicle, including operation of a service provider according to an embodiment of the present disclosure;

FIG. 11 a flowchart showing overall operation of a system for controlling landing of an air mobility vehicle according to an embodiment of the present disclosure; and

FIG. 12 illustrates a configuration of a computing system for executing a method according to an embodiment of the present disclosure.

## DETAILED DESCRIPTION OF ILLUSTRATIVE EMBODIMENTS

Hereinafter, some embodiments of the present disclosure will be described in detail with reference to the exemplary drawings. In adding the reference numerals to the components of each drawing, it should be noted that the identical or equivalent component is designated by the identical numeral even when it is displayed on other drawings. Further, in describing the embodiments of the present disclosure, a detailed description of well-known features or functions will be omitted in order not to unnecessarily obscure the gist of the present disclosure.

In describing the components of the embodiments according to the present disclosure, terms such as first, second, "A", "B", (a), (b), and the like may be used. These terms are merely intended to distinguish one component from another component, and the terms do not limit the nature, sequence, or order of the constituent components. Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art and are not to be interpreted as having ideal or excessively formal meanings unless clearly defined as having such in the present application.

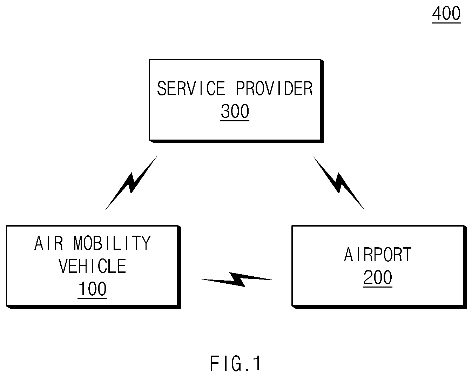

FIG. 1 is a diagram showing the configuration of a system for controlling landing of an air mobility vehicle according to an embodiment of the present disclosure.

Referring to FIG. 1, a system 400 for controlling landing of an air mobility vehicle according to an embodiment of the present disclosure may include an air mobility vehicle 100, an airport 200, and a service provider 300.

The air mobility vehicle 100 may include an air mobility vehicle capable of autonomous or semi-autonomous flight (driving) with occupants, including pilots and passengers, present on board and an air mobility vehicle capable of autonomous flight by an external control or program without a pilot or passenger on board. Specifically, the air mobility vehicle 100 may include a helicopter, a drone, an airplane, or a vehicle capable of moving with wheels on the ground and flying when moving to the air, and, as mentioned above, may include manned/unmanned air vehicles.

The airport 200 may include a landing pad where the air mobility vehicle is able to take off or land and a boarding field where passengers are able to get on and off. According to the embodiment, the landing pad may include a zone used for takeoff or landing of an air mobility vehicle and a runway for obtaining propulsion required for takeoff and landing. According to the embodiment, the airport 200 may include a Verti-Port, a Verti-Hub, and a Verti-pad, Verti-stop, and the like, which is a terminal where a vertical take-off and landing (VTOL) air mobility vehicle takes off and lands, is charged, and is subjected to maintenance, and passengers board on the VTOL air mobility vehicle.

The service provider (Provider of Services for UAM: PSU) 300 may share operational safety information of urban air mobility, manage traffic flow, and provide flight plan approval and route deviation monitoring services.

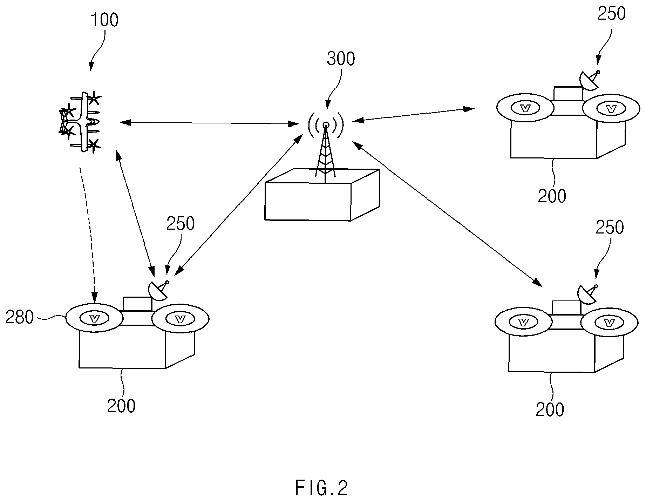

FIG. 2 is a diagram schematically showing a system for controlling landing of an air mobility vehicle according to an embodiment of the present disclosure.

Referring to FIG. 2, the air mobility vehicle 100 may wirelessly communicate with the service provider 300 and the airport 200 to receive information required for landing at a landing pad 280 of the airport 200. According to the embodiment, the air mobility vehicle 100 may take off and land in a direction perpendicular to the ground.

The airport 200 may receive radio signals of the air mobility vehicle 100, determine a relative position of the air mobility vehicle 100, and transmit a result of the determination to the service provider 300 through a communication device 250.

The service provider 300 may receive the relative position of the air mobility vehicle 100 from the airport 200, determine whether the air mobility vehicle 100 is able to descend to the landing pad 280 of the airport 200 at the position of the air mobility vehicle 100, and when descending is possible, transmit a command for allowing the air mobility vehicle 100 to land vertically to the air mobility vehicle 100 through wireless communication.

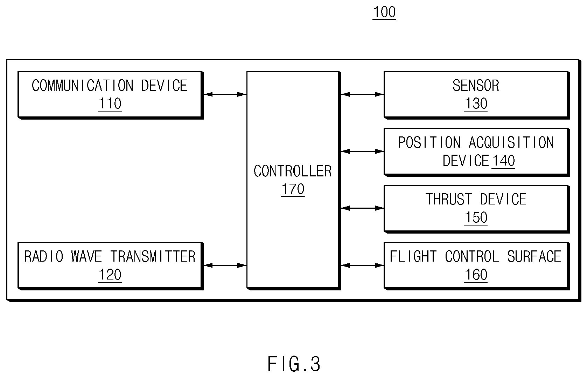

FIG. 3 is a diagram showing the configuration of an air mobility vehicle according to an embodiment of the present disclosure.

Referring to FIG. 3, the air mobility vehicle 100 may include a communication device 110, a radio wave transmitter 120, a sensor 130, a position acquisition device 140, a thrust device 150, a flight control surface 160, and a controller 170.

The communication device 110 may wirelessly communicate with the airport 200 and the service provider 300. According to an embodiment, the communication device 110 may include a transceiver that transmits and receives information using an antenna, a communication circuit, a communication processor, and the like, and may communicate with the airport 200 and the service provider 300 in various wireless communication methods including, for example, Wi-Fi, WiBro, Global System for Mobile Communication (GSM), Code Division Multiple Access (CDMA), Wideband Code Division Multiple Access (WCDMA), Universal Mobile Telecommunication System (UMTS), Time Division Multiple Access (TDMA), or Long Term Evolution (LTE).

The radio wave transmitter 120 may transmit a radio wave signal required to determine the relative position of an air mobility vehicle to the airport 200. According to an embodiment, the radio wave transmitter 120 may transmit radio wave signals to the airport 200 through beacon communication, ultra-wideband (UWB) communication, and automatic dependent surveillance-broadcast (ADS-B) communication.

The sensor 130 may include a weight on wheel sensor and may detect whether or not the air mobility vehicle is in contact with the ground. In addition, the sensor 130 may include an image sensor to obtain image information around the air mobility vehicle. In addition, the sensor 130 may include a distance sensor including a radar or LiDAR to measure a distance to an object around the air mobility vehicle.

The position acquisition device 140 may include a global navigation satellite system (GNSS) and may acquire the position of the air mobility vehicle. The position of the air mobility vehicle acquired by the position acquisition device 140 may be transmitted to the controller 170, and the controller 170 may determine whether the air mobility vehicle has approached the landing pad of the airport 200 based on the position of the air mobility vehicle.

The thrust device 150 may adjust the altitude and speed of the air mobility vehicle by generating thrust (a force that allows the air mobility vehicle to fly forward through action-reaction when air is pushed to the rear of the air mobility vehicle by a propeller or engine of the air mobility vehicle).

The flight control surface 160 may include an external device for controlling the direction and posture of the air mobility vehicle, and according to an embodiment, may include an aileron, an elevator, a rudder, a flap, a slat, or a spoiler.

The controller 170 may be implemented by various processing devices such as a microprocessor incorporating a semiconductor chip capable of operating or executing various instructions or the like and may control an operation of the air mobility vehicle according to an embodiment of the present disclosure. The controller 170 may be electrically connected to the communication device 110, the radio wave transmitter 120, the sensor 130, the position acquisition device 140, the thrust device 150, and the flight control surface 160 through wired cables or various circuits to transmit electrical signals including control commands and the like and transmit and receive electrical signals including control commands and the like through various wireless communication networks.

The controller 170 may perform control such that the air mobility vehicle approaches the landing pad based on the position information acquired by the position acquisition device 140. According to an embodiment, the controller 170 may perform control such that the air mobility vehicle approaches the airport 200 to be landed based on position information provided by the GNSS.

When determining that the air mobility vehicle approaches the airport 200 including the landing pad, the controller 170 may transmit a signal for requesting landing permission to the service provider 300 and wait for a response after requesting landing permission.

The controller 170 may receive a signal indicating that landing is permitted from the service provider 300 when it is determined that the air mobility vehicle is capable of landing.

When the signal indicating that landing is permitted is received, the controller 170 may transmit a radio signal required to determine a relative position of the air mobility vehicle at the airport 200 through the radio wave transmitter 120.

The controller 170 may prepare a landing process when transmitting the radio signal. According to an embodiment, the controller 170 may receive a control command from the service provider 300 and adjust a horizontal position.

The controller 170 may determine whether the air mobility vehicle is able to land vertically when the horizontal position is adjusted and may determine that the air mobility vehicle is able to land vertically when receiving the command for allowing the air mobility vehicle to land vertically from the service provider 300. The controller 170 may determine that the air mobility vehicle is unable to land vertically when the command for allowing the air mobility vehicle to land is not received and may receive a control command for adjusting the horizontal position again.

The controller 170 may perform control such that the air mobility vehicle lands vertically on the landing pad when the air mobility vehicle is able to land vertically. The controller 170 may determine whether or not the wheels of the air mobility vehicle are in contact with the ground based on detection information of the sensor 130 during landing.

When it is determined that the wheels of the air mobility vehicle are not in contact with the ground, the controller 170 may receive a control command from the service provider 300 again.

When the wheels of the air mobility vehicle are in contact with the ground, the controller 170 may determine that the air mobility vehicle has landed on the landing pad and transmit a landing completion message to the service provider 300 and the airport 200. In addition, the controller 170 may perform control to allow the air mobility vehicle to move to a boarding field where passengers are able to get on and off on the ground.

The controller 170 may transmit a request message requesting support for air mobility vehicle movement to the airport 200 when the air mobility vehicle is unable to move to the boarding field on the ground.

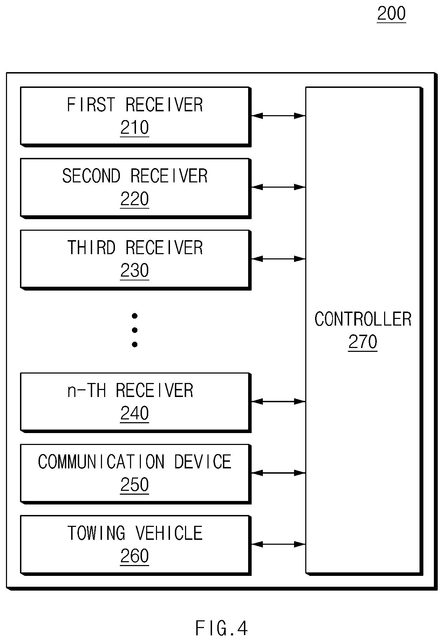

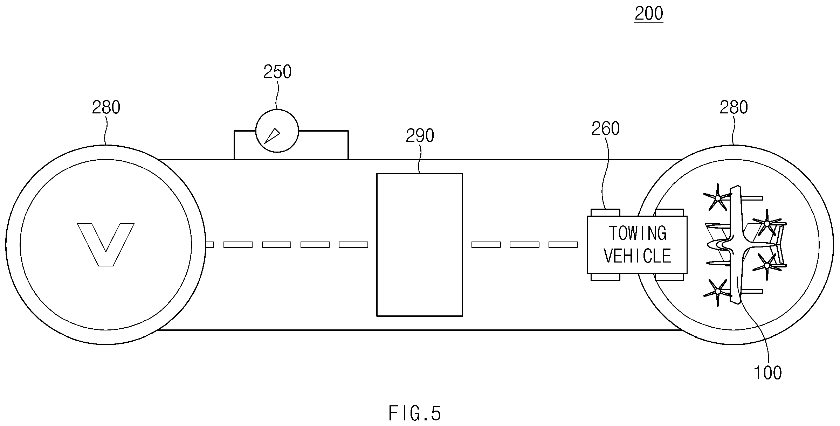

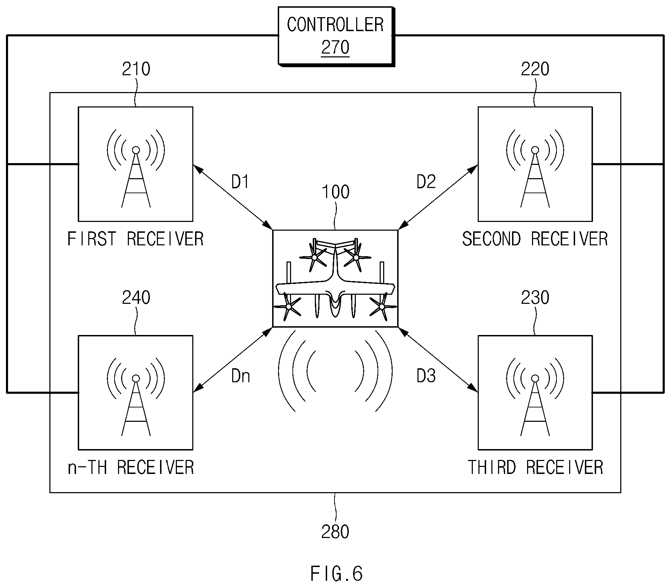

FIG. 4 is a diagram showing a configuration of an airport according to an embodiment of the present disclosure, FIG. 5 is a diagram schematically showing an airport and an air mobility vehicle according to an embodiment of the present disclosure, and FIG. 6 is a diagram schematically showing a method for calculating a position of an air mobility vehicle according to an embodiment of the present disclosure.

Referring to FIG. 4, the airport 200 may include a plurality of receivers, the communication device 250, a towing vehicle 260, and a controller 270. In addition, as shown in FIG. 5, the airport 200 may further include the landing pad 280 and a boarding field 290.

As shown in FIG. 6, the plurality of receivers may include a first receiver 210, a second receiver 220, a third receiver 230, ..., and an n-th receiver 240. According to an embodiment, at least four receivers may be provided in the landing pad 280. The plurality of receivers may receive radio signals transmitted from the air mobility vehicle 100. Each of the plurality of receivers may include a distance sensor and may measure a distance between each receiver and the air mobility vehicle 100.

The communication device 250 may communicate wirelessly with the air mobility vehicle 100 and the service provider 300. According to an embodiment, the communication device 250 may include a transceiver, a communication circuit, a communication processor, or the like, which transmits and receives information using an antenna and communicates with the air mobility vehicle 100 and the service provider 300 in various wireless communication methods including Wi-Fi, WiBro, Global System for Mobile Communication (GSM), Code Division Multiple Access (CDMA), Wideband Code Division Multiple Access (WCDMA), Universal Mobile Telecommunication System (UMTS), Time Division Multiple Access (TDMA), Long Term Evolution (LTE), or the like.

The towing vehicle 260 may move passengers while autonomously driving from the landing pad 280 to the boarding field 290 or from the boarding field 290 to the landing pad 280 under the control of the controller 270.

The controller 270 may be implemented by various processing devices such as a microprocessor incorporating a semiconductor chip capable of operating or executing various instructions or the like and may control an operation of the airport according to an embodiment of the present disclosure. The controller 270 may be electrically connected to the plurality of receivers and the communication device 250 through wired cables or various circuits to transmit electrical signals including control commands and the like and transmit and receive electrical signals including control commands and the like through various wireless communication networks.

The controller 270 may determine whether the landing pad 280 is available when receiving a signal indicating that the landing of the air mobility vehicle 100 is permitted from the service provider 300.

When another air mobility vehicle has landed on the landing pad 280, the controller 270 may transmit a signal indicating that the landing pad is unavailable to the service provider 300 and then re-determine whether the landing pad 280 is available. The controller 270 may transmit a signal indicating that the landing pad is available to the service provider 300 when another vehicle has not landed on the landing pad 280.

When transmitting the signal indicating that a landing pad is available to the service provider 300, the controller 270 may receive a radio signal transmitted from the air mobility vehicle 100. According to an embodiment, the controller 270 may receive radio signals through the plurality of receivers.

The controller 270 may determine a relative position of the air mobility vehicle 100 with respect to the landing pad 280 based on the radio signals received through the plurality of receivers. According to an embodiment, the controller 270 may set a reference receiver among the plurality of receivers and may determine the relative position of the air mobility vehicle 100 using a distance between the reference receiver and the air mobility vehicle 100 and respective distances between the air mobility vehicle 100 and receivers other than the reference receiver.

According to an embodiment, when a time at which the radio signal is transmitted from the air mobility vehicle 100 is Ts and a time at which the radio signal is received by an i-th receiver (reference receiver) is Ti, the controller 270 may calculate a distance Di between the air mobility vehicle 100 and the i-th receiver using Equation 1 based on the time Ts at which the radio signal is transmitted and the time Ti at which the radio signal is received by the i-th receiver.

Equation 1:

$$D_i = c(T_i - T_s) - e_i = \sqrt{(x - x_i)^2 + (y - y_i)^2(z - z_i)^2}$$

In Equation 1, c is the speed of the radio signal (speed of light), (x, y, z) is the 3-dimensional position coordinates of the air mobility vehicle to be estimated, $(x_i, y_i, z_i)$ is the position coordinates of the i-th receiver, and $e_i$ is the time measurement error at the i-th receiver.

The controller 270 may calculate a difference $D_{ik}$ between a distance Di between the air mobility vehicle 100 and the i-th receiver and a distance $D_k$ between the air mobility vehicle 100 and a k-th receiver (remaining receivers except for the reference receiver) by using Equation 2.

Equation 2:

$$D_{ik} = [c(T_i - T_s) - e_i] - [c(T_k - T_s) - e_k] = c(T_i - T_k) - (e_i - e_k)$$

$$= \sqrt{(x - x_i)^2 + (y - y_i)^2 + (z - z_i)^2} - \sqrt{(x - x_k)^2 + (y - y_k)^2 + (z - z_k)^2}$$

$$= f_{ik}(x, y, z, x_i, y_i, z_i, x_k, y_k, z_k)$$

The controller 270 may calculate (n-1) numbers of $D_{ik} = f_{ik}$ for n receivers.

For example, when the controller 270 sets the first receiver 210 of FIG. 6 as a reference receiver, the controller 270 may calculate a distance between the first receiver 210 and the air mobility vehicle 100 as $D_1$, a distance between the second receiver 220 and the air mobility vehicle 100 as $D_2$, a distance between the third receiver 230 and the air mobility vehicle 100 as $D_3$, and a distance between the n-th receiver 240 and the air mobility vehicle 100 as $D_n$. In addition, the controller 270 may calculate the difference between $D_1$ and $D_2$ as $D_{12}$, the difference between $D_1$ and $D_3$ as $D_{13}$, and the difference between $D_1$ and $D_n$ as $D_{1n}$ and may calculate the relative position of the air mobility vehicle based on $D_{12}$ and $D_{13}$ to $D_{1n}$.

The controller 270 may estimate the positional coordinates of the air mobility vehicle from the intersection of the hyperbolic planes because $D_{ik}$ has the shape of the hyperbolic plane having positions of the i-th receiver and the k-th receiver as focuses according to the mathematical definition.

The controller 270 may set an estimated initial position of the air mobility vehicle to $(x_o, y_o, z_o)$, and may develop $f_{ik}$ to the first term of the Taylor series from the estimated initial position to express Equation 3.

Equation 3:

$$f_{ik}|_{x_0,y_0,z_0} + a_{ik,x}\delta x + a_{ik,y}\delta y + a_{ik,z}\delta z \cong c(T_i - T_k) - (e_i - e_k)$$

(where $a_{ik,x} = \dfrac{\partial f_{ik}}{\partial x}\Big|_{x_0,y_0,z_0}$ , $a_{ik,y} = \dfrac{\partial f_{ik}}{\partial y}\Big|_{x_0,y_0,z_0}$ , $a_{ik,z} = \dfrac{\partial f_{ik}}{\partial z}\Big|_{x_0,y_0,z_0}$ , $\delta x$, $\delta y$, $\delta z$ are positional

coordinate errors of the air mobility vehicle 100, and $f_{ik}|_{x_0,y_0,z_0} = f_{ik}(x_0, y_0, z_0, x_i, y_i, z_i, x_k, y_k, z_k)$ ).

The controller 270 may organize n-1 numbers of $D_{ik} = f_{ik}$ in the form of a matrix such as Equation 4. (Equation 4 is an equation calculated when the first receiver is set as the reference receiver.)

Equation 4:

$$A\delta = z - e$$

$$A = \begin{bmatrix} a_{12,x} & a_{12,y} & a_{12,z} \\ a_{13,x} & a_{13,y} & a_{13,z} \\ a_{14,x} & a_{14,y} & a_{14,z} \\ \vdots & \vdots & \vdots \\ a_{1n,x} & a_{1n,y} & a_{1n,z} \end{bmatrix}, \delta = \begin{bmatrix} \delta x \\ \delta y \\ \delta z \end{bmatrix}, z = \begin{bmatrix} c(T_1 - T_2) - f_{12}|_{x_0,y_0,z_0} \\ c(T_1 - T_3) - f_{13}|_{x_0,y_0,z_0} \\ c(T_1 - T_4) - f_{14}|_{x_0,y_0,z_0} \\ \vdots \\ c(T_1 - T_n) - f_{1n}|_{x_0,y_0,z_0} \end{bmatrix}, e = \begin{bmatrix} e_1 - e_2 \\ e_1 - e_3 \\ e_1 - e_4 \\ \vdots \\ e_1 - e_n \end{bmatrix}$$

According to an embodiment, the controller 270 may calculate $\delta$ in Equation 4 as in Equation 5 by referring to Wade H. Foy, "Position-Location Solutions by Taylor-Series Estimation", IEEE Transaction on Aerospace and Electronics Systems, Vol. AES-12, no. 2, 1976.

Equation 5:

$$\hat{\delta} = \left[A^T R^{-1} A\right]^{-1} A^T R^{-1} z$$

(where R is the covariance matrix of measurement error).

Therefore, the controller 270 may update the initial position of the air mobility vehicle 100 as in Equation 6.

Equation 6:

$$\begin{bmatrix} x_0 \\ y_0 \\ z_0 \end{bmatrix} \leftarrow \begin{bmatrix} x_0 \\ y_0 \\ z_0 \end{bmatrix} + \hat{\delta}$$

The controller 270 may determine the updated $\begin{bmatrix} x_0 \\ y_0 \\ z_0 \end{bmatrix}$ as the relative position of the air mobility vehicle 100 when $\hat{\delta}$

is smaller than a target threshold.

When the relative position of the air mobility vehicle with respect to the landing pad 280 is determined, the controller 270 may transmit a result of the determination to the service provider 300.

After the relative position of the air mobility vehicle 100 is transmitted, the controller 270 may receive a landing completion message and, when receiving a message requesting movement of the air mobility vehicle, control the towing vehicle 260 such that the air mobility vehicle 100 moves to the boarding field 290 to support the movement of the air mobility vehicle 100.

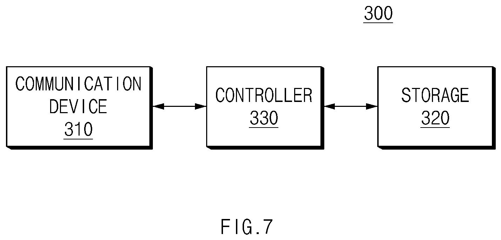

FIG. 7 is a diagram illustrating a configuration of a service provider according to an embodiment of the present disclosure.

Referring to FIG. 7, the service provider 300 may include a communication device 310, a storage (i.e., a memory) 320, and a controller 330.

The communication device 310 may wirelessly communicate with the air mobility vehicle 100 and the airport 200. According to an embodiment, the communication device 310 may include a transceiver, a communication circuit, a communication processor, or the like, which transmits and receives information using an antenna and communicates with the air mobility vehicle 100 and the airport 200 in various wireless communication methods including Wi-Fi, WiBro, Global System for Mobile Communication (GSM), Code Division Multiple Access (CDMA), Wideband Code Division Multiple Access (WCDMA), Universal Mobile Telecommunication System (UMTS), Time Division Multiple Access (TDMA), Long Term Evolution (LTE), or the like.

The storage 320 may store at least one or more algorithms for performing operation or execution of various commands for operation of a service provider according to an embodiment of the present disclosure. The storage 320 may include at least one storage medium among a flash memory, a hard disk, a memory card, a read-only memory (ROM), a random access memory (RAM), an electrically erasable programmable read-only memory (EEPROM), a programmable read-only memory (PROM), a magnetic memory, a magnetic disk, and an optical disk.

The controller 330 may be implemented by various processing devices such as a microprocessor with a built-in semiconductor chip capable of performing operations or executions of various commands and may control the operation of a service provider according to an embodiment of the present disclosure. The controller 330 may be electrically connected to the communication device 310 and the storage 320 through wired cables or various circuits to transmit electrical signals including control commands or the like to them and may transmit or receive an electrical signal including a control command and the like through various wireless communication networks.

The controller 330 may determine information of the air mobility vehicle 100 when receiving a signal for requesting landing permission from the air mobility vehicle 100. According to an embodiment, the controller 330 may determine the information of the air mobility vehicle 100 based on the signal for requesting landing permission received from the air mobility vehicle 100 and may determine the information of the air mobility vehicle 100 based on information separately received from the air mobility vehicle 100.

The controller 330 may determine whether or not the air mobility vehicle 100 is an air mobility vehicle capable of landing on a landing pad based on the information of the air mobility vehicle 100.

When it is determined that the air mobility vehicle 100 is an air mobility vehicle capable of landing on a landing pad, the controller 330 may transmit a signal indicating that landing is permitted to the air mobility vehicle 100. On the other hand, when it is determined that the air mobility vehicle 100 is an air mobility vehicle incapable of landing, the controller 330 may transmit a signal indicating that landing is impossible to the air mobility vehicle 100.

When the signal indicating that landing is permitted is transmitted to the air mobility vehicle 100, the controller 330 may transmit a request message for determining whether the landing pad is available to the airport 200.

When receiving a signal indicating that the landing pad is available from the airport 200, the controller 330 may request information on a relative position of the air mobility vehicle 100 with respect to the landing pad from the airport 200.

When receiving the information on the relative position of the air mobility vehicle 100 from the airport 200, the controller 330 may determine whether the air mobility vehicle 100 is within a predetermined range from the landing pad based on the information on the relative position of the air mobility vehicle 100.

When it is determined that the air mobility vehicle 100 is within the predetermined range from the landing pad, the controller 330 may determine that the air mobility vehicle 100 is able to land vertically on the landing pad and may transmit a command for allowing the air mobility vehicle 100 to land vertically to the air mobility vehicle 100.

The controller 330 may perform control to terminate a landing control operation when receiving a landing completion message from the air mobility vehicle 100 after the command for allowing the air mobility vehicle 100 to land vertically is transmitted to the air mobility vehicle 100.

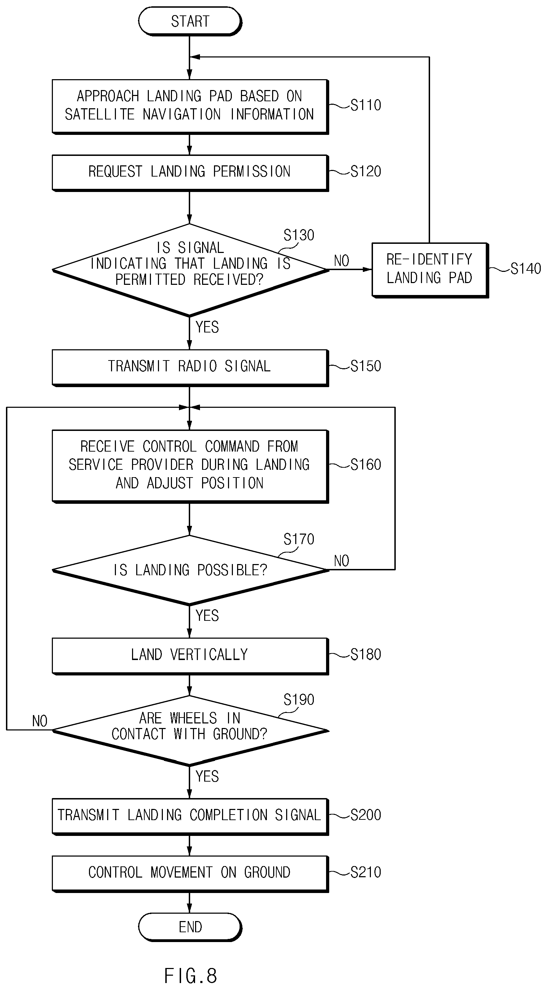

FIG. 8 is a flowchart illustrating a method for controlling the landing of an air mobility vehicle, including operation of an air mobility vehicle according to an embodiment of the present disclosure.

Referring to FIG. 8, the air mobility vehicle 100 may be controlled to approach a landing pad based on position information (S110). According to an embodiment, in S110, the air mobility vehicle 100 may perform control such that the air mobility vehicle approaches the surroundings of the airport 200 to be landed based on position information provided by the GNSS.

When determining that the air mobility vehicle approaches the airport 200 including the landing pad, the air mobility vehicle 100 may transmit a signal for requesting landing permission to the service provider 300 and may wait for a response after requesting landing permission (S120).

The air mobility vehicle 100 may determine whether or not a signal indicating that landing is permitted is received (S130).

In S130, when it is determined that the signal indicating that landing is permitted is not received, the air mobility vehicle 100 may re-identify a position of a landing pad (S140). Thereafter, the air mobility vehicle 100 may attempt to approach the landing pad based on the position information of the air mobility vehicle which is acquired by GNSS.

On the other hand, when it is determined that the signal indicating that landing is permitted is received in S130, the air mobility vehicle 100 may transmit a radio signal to the airport 200 (S150).

When the air mobility vehicle 100 transmits the radio signal, the air mobility vehicle 100 may receive a control command from the service provider 300 and adjust its horizontal position (S160).

When the horizontal position of the air mobility vehicle 100 is adjusted, the air mobility vehicle 100 may determine whether the air mobility vehicle 100 is able to land vertically (S170).

The air mobility vehicle 100 may determine that the air mobility vehicle is able to land vertically when receiving the command for allowing the air mobility vehicle to land vertically from the service provider 300.

In S170, the air mobility vehicle 100 may determine that the air mobility vehicle is unable to land when the command for allowing the air mobility vehicle to land is not received and may receive a control command for adjusting the horizontal position again (S160).

The air mobility vehicle 100 may perform control such that the air mobility vehicle lands vertically on the landing pad when the air mobility vehicle is able to land vertically (S180).

The air mobility vehicle 100 may determine whether or not the wheels of the air mobility vehicle are in contact with the ground based on detection information of the sensor 130 during landing (S190).

When it is determined that the wheels of the air mobility vehicle are not in contact with the ground in S190, the air mobility vehicle 100 may receive a control command from the service provider 300 again (S160).

When the wheels of the air mobility vehicle are in contact with the ground, the air mobility vehicle 100 may determine that the air mobility vehicle has landed on the landing pad and may transmit a landing completion message to the service provider 300 and the airport 200 (S200).

When the landing completion message is transmitted, the air mobility vehicle 100 may perform control such that the air mobility vehicle 100 moves to the boarding field 290 where passengers get on and off on the ground (S210).

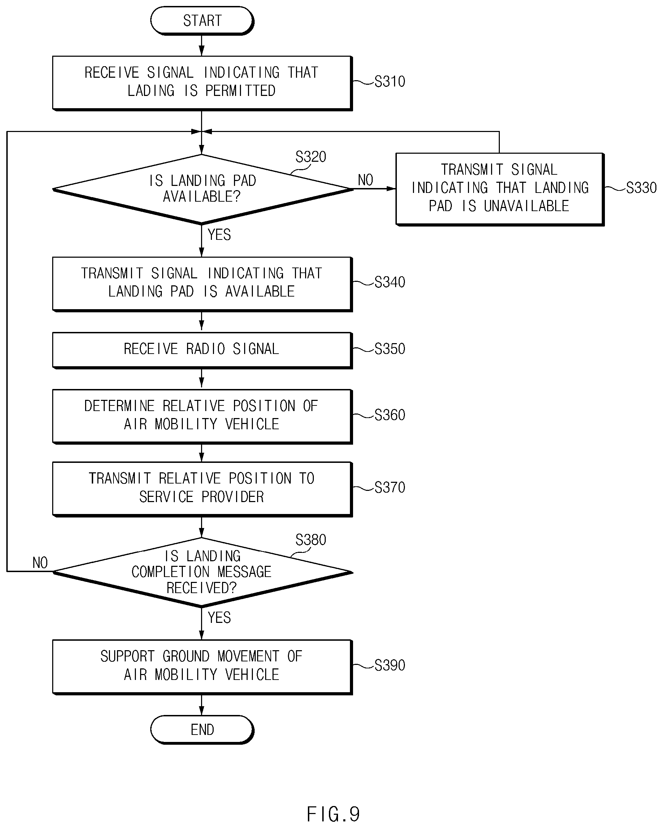

FIG. 9 is a flowchart illustrating a method for controlling the landing of an air mobility vehicle, including operation of an airport according to an embodiment of the present disclosure.

The airport 200 may receive a signal indicating that landing of the air mobility vehicle 100 is permitted from the service provider 300 (S310).

The airport 200 may determine whether the landing pad 280 is available (S320).

When the airport 200 is in a state where another air mobility vehicle has landed on the landing pad 280 or in a state in which the air mobility vehicle is unable to land on the ground of the landing pad 280 in S320, the airport 200 may transmit a signal indicating that a landing pad is unavailable to the service provider 300 (S330), and then re-determine whether the landing pad 280 is available.

When the airport 200 is in a state where another air mobility vehicle has not landed on the landing pad 280 in S320, the airport 200 may transmit a signal indicating that a landing pad is available to the service provider 300 (S340).

When transmitting the signal indicating that a landing pad is available to the service provider 300, the airport 200 may receive the radio signal transmitted from the air mobility vehicle 100 (S350). According to an embodiment, in S350, the airport 200 may receive radio signals through a plurality of receivers.

The airport 200 may determine a relative position of the air mobility vehicle 100 with respect to the landing pad 280 based on the radio signals received through the plurality of receivers (S360).

According to an embodiment, in S360, the airport 200 may set a reference receiver among the plurality of receivers and may determine the relative position of the air mobility vehicle 100 using a distance between the reference receiver and the air mobility vehicle 100 and a distance between the air mobility vehicle 100 and a receiver other than the reference receiver.

According to an embodiment, in S360, the airport 200 may determine the relative position of the air mobility vehicle 100 using Equations 1 to 6.

When the relative position of the air mobility vehicle 100 with respect to the landing pad 280 is determined, the airport 200 may transmit a result of the determination to the service provider 300 (S370).

After transmitting the relative position of the air mobility vehicle 100, the airport 200 may determine whether a landing completion message is received from the air mobility vehicle 100 (S380).

After the relative position of the air mobility vehicle 100 is transmitted, the airport 200 may perform S320 when it is determined that the landing completion message is not received from the air mobility vehicle 100 in S380.

After the relative position of the air mobility vehicle 100 is transmitted in S380, the airport 200 may determine that the landing completion message is received from the air mobility vehicle 100 and, when it is determined that a request message requesting movement of the air mobility vehicle is separately received, control the towing vehicle 260 such that the air mobility vehicle 100 is moved to the boarding field 290 to support the movement of the air mobility vehicle 100.

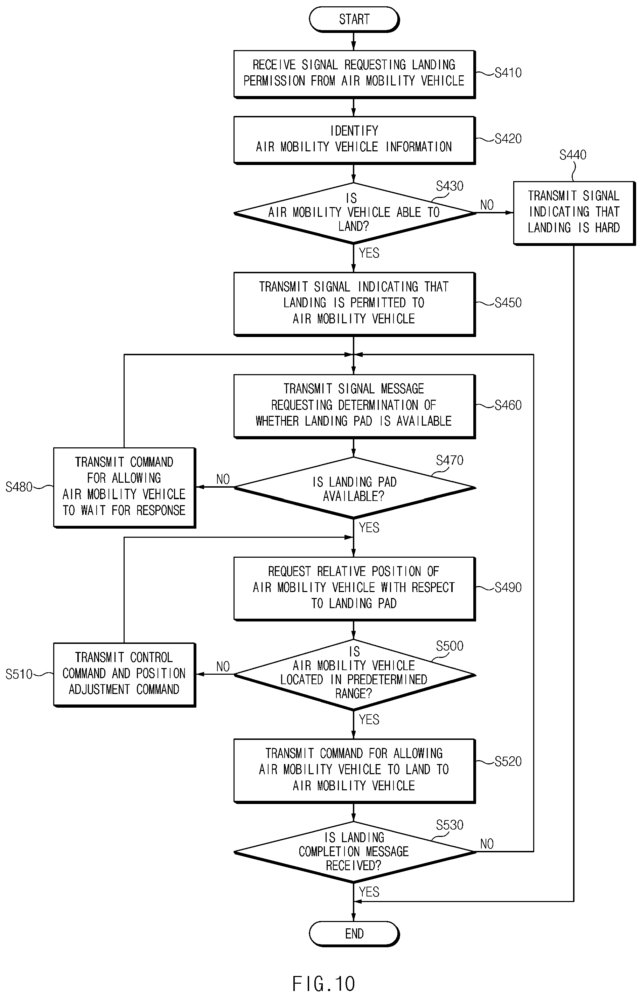

FIG. 10 is a flowchart illustrating a method for controlling the landing of an air mobility vehicle, including operation of a service provider according to an embodiment of the present disclosure.

The service provider 300 may receive a signal for requesting landing permission from the air mobility vehicle (S410).

The service provider 300 may determine information on the air mobility vehicle 100 when receiving a signal for requesting landing permission from the air mobility vehicle 100 (S420).

According to an embodiment, in S420, the service provider 300 may determine the information of the air mobility vehicle 100 based on the signal for requesting landing permission received from the air mobility vehicle 100 and may determine the information of the air mobility vehicle 100 based on information separately received from the air mobility vehicle 100.

The service provider 300 may determine whether or not the air mobility vehicle 100 is an air mobility vehicle capable of landing on a landing pad based on the information of the air mobility vehicle 100 (S430).

When it is determined that the air mobility vehicle 100 is an air mobility vehicle incapable of landing in S430, the service provider 300 may transmit a signal indicating that landing is hard to the air mobility vehicle 100 (S440).

When it is determined that the air mobility vehicle 100 is an air mobility vehicle capable of landing on a landing pad in S430, the service provider 300 may transmit a signal indicating that landing is permitted to the air mobility vehicle 100 (S450).

When the signal indicating that landing is permitted is transmitted to the air mobility vehicle 100, the service provider 300 may transmit a message requesting determination of whether the landing pad is available to the airport 200 (S460).

The service provider 300 may determine whether the landing pad is available (S470).

The service provider 300 may determine that the landing pad is available when receiving a signal indicating that a landing pad is available from the airport 200 and may determine that the landing pad is unavailable when receiving a signal indicating that a landing pad is unavailable from the airport 200.

When it is determined that the landing pad is unavailable, the service provider 300 may transmit a command for allowing the air mobility vehicle to wait for a response to the air mobility vehicle 100 (S480). The service provider 300 may perform S460 after performing operation of S480.

When it is determined that the landing pad is available, the service provider 300 may request, from the airport 200, information on a relative position of the air mobility vehicle 100 with respect to the landing pad 280 (S490).

When receiving the information on the relative position of the air mobility vehicle 100 from the airport 200, the service provider 300 may determine whether the air mobility vehicle 100 is within a predetermined range from the landing pad based on the information on the relative position of the air mobility vehicle 100 (S500).

When it is determined that the air mobility vehicle 100 is out of a predetermined range from the landing pad in S500, the service provider 300 may transmit a control command and a position adjustment command (S510). The service provider 300 may perform S490 after performing operation S510.

When it is determined that the air mobility vehicle 100 is within the predetermined range from the landing pad in S500, the service provider 300 may determine that the air mobility vehicle 100 is able to land vertically on the landing pad and may transmit a command for allowing the air mobility vehicle 100 to land vertically to the air mobility vehicle 100 (S520).

The service provider 300 may determine whether a landing completion message is received from the air mobility vehicle 100 after the command for allowing the air mobility vehicle 100 to land vertically is transmitted to the air mobility vehicle 100 (S530).

The service provider 300 may perform control to terminate a landing control operation when receiving a landing completion message from the air mobility vehicle 100 after the command for allowing the air mobility vehicle 100 to land vertically is transmitted to the air mobility vehicle 100 in S530.

The service provider 300 may perform S460 when the landing completion message is not received from the air mobility vehicle 100 after the command for allowing the air mobility vehicle 100 to land is transmitted to the air mobility vehicle 100 in S530.

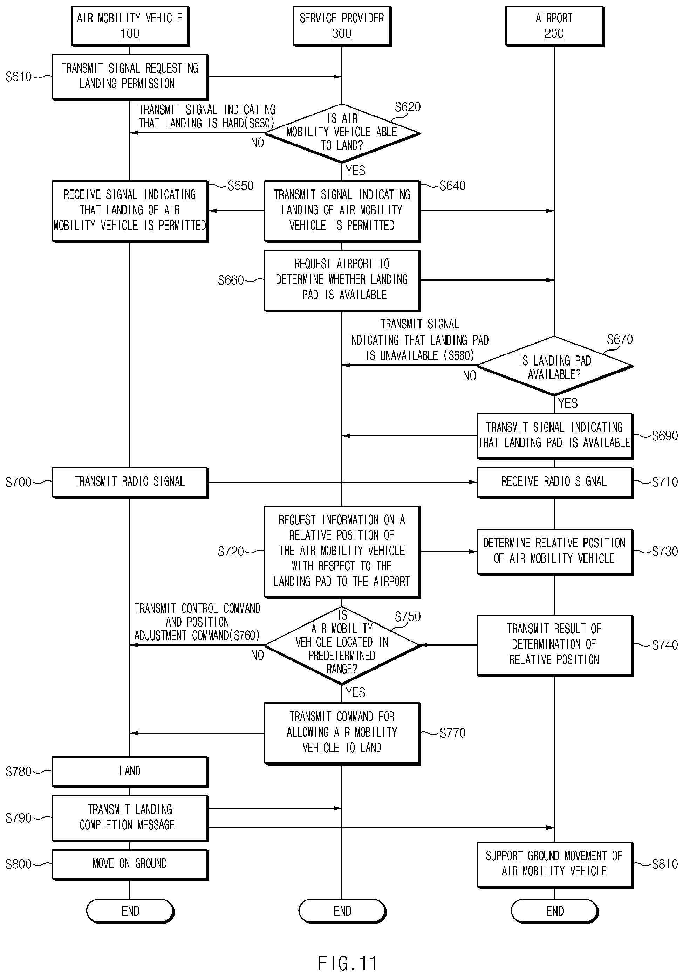

FIG. 11 is a flowchart showing overall operation of a system for controlling landing of an air mobility vehicle according to an embodiment of the present disclosure.

Referring to FIG. 11, the air mobility vehicle 100 may transmit a signal requesting landing permission to the service provider 300 (S610).

The service provider 300 may determine whether the air mobility vehicle 100 is an air mobility vehicle capable of landing on a landing pad when receiving the signal for requesting landing permission from the air mobility vehicle 100 (S620).

When it is determined that the air mobility vehicle 100 is an air mobility vehicle capable of landing on the landing pad in S620, the service provider 300 may transmit a signal indicating that landing is permitted to the air mobility vehicle 100 (S640). In S640, the service provider 300 may also transmit a signal indicating that the signal indicating that landing is permitted has been transmitted to the air mobility vehicle 100 to the airport 200.

When it is determined that the air mobility vehicle 100 is an air mobility vehicle incapable of landing on the landing pad in S620, the service provider 300 may transmit a signal indicating that landing is hard to the air mobility vehicle 100 (S630).

The service provider 300 may transmit a signal for landing permission to the air mobility vehicle 100 and then may transmit a signal for requesting identification as to whether a landing pad is available to the airport 200 (S660).

The airport 200 may determine whether the landing pad is available (S670).

When it is determined that the landing pad is unavailable in S670, the airport 200 may transmit a signal indicating that the landing pad is unavailable to the service provider 300 (S680).

When it is determined that the landing pad is available in S670, the airport 200 may transmit a signal indicating that the landing pad is available to the service provider 300 (S690).

On the other hand, when receiving the signal indicating that landing is permitted from the service provider 300(S650), the air mobility vehicle 100 may transmit a radio signal to the airport 200 (S700), and the airport 200 may receive the radio signal transmitted from the air mobility vehicle 100 (S710).

When receiving a signal indicating that the landing pad is available from the airport 200, the service provider 300 may request information on a relative position of the air mobility vehicle with respect to the landing pad from the airport 200 (S720).

The airport 200 may determine the relative position of the air mobility vehicle with respect to the landing pad based on the radio signal received in S710 (S730) and may transmit the determined relative position of the air mobility vehicle to the service provider 300 (S740).

The service provider 300 may determine whether the air mobility vehicle 100 is located within a predetermined range from the landing pad based on the information received through S740 (S750).

When it is determined that the air mobility vehicle 100 is not located within a predetermined range from the landing pad in S750, the service provider 300 may transmit a control command and a position adjustment command to the air mobility vehicle 100 (S760).

When it is determined that the air mobility vehicle 100 is located within the predetermined range from the landing pad in S750, the service provider 300 may transmit a command for allowing air mobility vehicle 100 to land vertically to the air mobility vehicle 100 (S770).

The air mobility vehicle 100 may perform control such that the air mobility vehicle 100 lands vertically when receiving a command for allowing the air mobility vehicle 100 to land vertically from the service provider 300 (S780), may determine that the air mobility vehicle 100 has landed on the landing pad when it is determined that the wheels are in contact with the ground, and may transmit a landing completion message to the service provider 300 and the airport 200 (S790).

When the landing completion message is transmitted, the air mobility vehicle 100 may determine whether a request for movement of the air mobility vehicle 100 is included in the landing completion message, and when it is determined that a request for movement of the air mobility vehicle 100 is included in the landing completion message, may perform control such that the air mobility vehicle is moved to a boarding field (S800).

When the airport 200 receives a request for movement of the air mobility vehicle 100 included in the landing completion message or separately receives a message requesting movement of the air mobility vehicle 100, the airport 200 may perform control to support ground movement of the air mobility vehicle (S810). In S810, the airport 200 may control the movement of the air mobility vehicle 100 by controlling a towing vehicle.

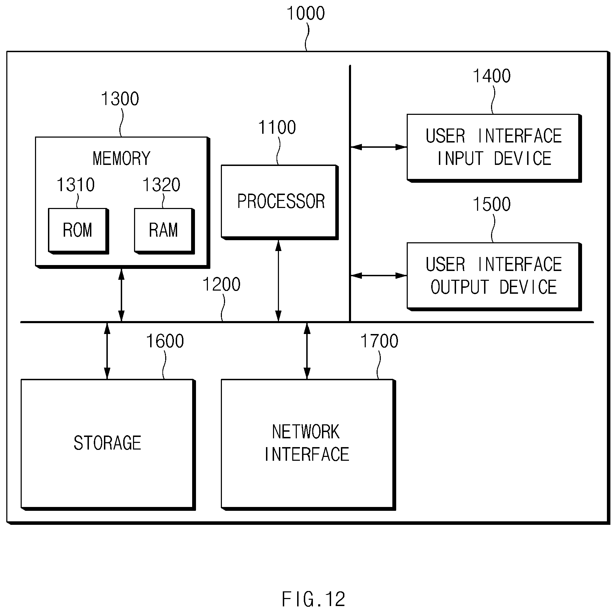

FIG. 12 illustrates a configuration of a computing system for executing a method according to an embodiment of the present disclosure.

Referring to FIG. 12, a computing system 1000 may include at least one processor 1100, a memory 1300, a user interface input device 1400, a user interface output device 1500, a storage (i.e., a memory) 1600, and a network interface 1700, which are connected with each other via a bus 1200.

The processor 1100 may be a central processing unit (CPU) or a semiconductor device that processes instructions stored in the memory 1300 and/or the storage 1600. The memory 1300 and the storage 1600 may include various types of volatile or non-volatile storage media. For example, the memory 1300 may include a ROM (Read Only Memory) 1310 and a RAM (Random Access Memory) 1320.

Thus, the operations of the method or the algorithm described in connection with the embodiments disclosed herein may be embodied directly in hardware or a software module executed by the processor 1100 or in a combination thereof. The software module may reside on a storage medium (that is, the memory 1300 and/or the storage 1600) such as a RAM, a flash memory, a ROM, an EPROM, an EEPROM, a register, a hard disk, a removable disk, and a CD-ROM. The exemplary storage medium may be coupled to the processor 1100, and the processor 1100 may read information out of the storage medium and may record information in the storage medium. Alternatively, the storage medium may be integrated with the processor 1100. The processor and the storage medium may reside in an application specific integrated circuit (ASIC). The ASIC may reside within a user terminal. In another case, the processor and the storage medium may reside in the user terminal as separate components.

The above description is merely illustrative of the technical idea of the present disclosure, and various modifications and variations may be made without departing from the essential characteristics of embodiments of the present disclosure by those skilled in the art to which the present disclosure pertains.

Accordingly, the embodiments disclosed in the present disclosure are not intended to limit the technical idea of the present disclosure but to describe the present disclosure, and the scope of the technical idea of the present disclosure is not limited by the embodiments. The scope of protection of the present disclosure should be interpreted by the following claims.

Hereinabove, although embodiments of the present disclosure have been described with reference to exemplary embodiments and the accompanying drawings, the embodiments of the present disclosure are not limited thereto, but may be variously modified and altered by those skilled in the art to which the present disclosure pertains without departing from the scope of the following claims.

**Claims**

1. A system comprising:

   an air mobility vehicle (100) configured to transmit a radio signal required to determine a relative position of the air mobility vehicle (100) in response to receiving a signal indicating that landing on a landing pad (280) is permitted;
   an airport device configured to receive the radio signal, determine the relative position of the air mobility vehicle (100), and transmit the relative position; and
   a service provider (300) configured to transmit the signal indicating permission to land on the landing pad (280) and transmit a command for allowing the air mobility vehicle (100) to land vertically to the air mobility vehicle (100) when it is determined that the air mobility vehicle (100) is located within a predetermined range from the landing pad (280) based on the relative position.

2. The system of claim 1, wherein the service provider (300) is configured to:

   receive a signal requesting landing permission from the air mobility vehicle (100); and
   transmit the signal indicating that landing on the landing pad (280) is permitted to the air mobility vehicle (100) in response to a determination that the air mobility vehicle (100) is capable of landing based on information of the air mobility vehicle (100).

3. The system of claim 2, wherein the service provider (300) is configured to:

   request determination of whether the landing pad (280) is available from the airport device after transmitting to the air mobility vehicle (100) the signal indicating that landing is permitted; and
   receive a result of determination of whether the landing pad (280) is available from the airport device.

4. The system of claim 3, wherein the service provider (300) is configured to request the relative position of the air mobility vehicle (100) with respect to the landing pad (280) from the airport device in response to the result of the determination being that the landing pad (280) is available.

5. The system of anyone of claims 1-4, wherein the airport device comprises a plurality of receivers (N receivers) each configured to receive the radio signal.

6. The system of claim 5, wherein the airport device is configured to set one of the plurality of receivers (N receivers) as a reference receiver and to calculate a first distance between the reference receiver and the air mobility vehicle (100).

7. The system of claim 6, wherein the airport device is configured to calculate a second distance to an N-th distance respectively corresponding to distances between the air mobility vehicle (100) and the receivers other than the reference receiver among the plurality of receivers (N receivers).

8. The system of claim 7, wherein the airport device is configured to:

   calculate a first value that is a difference between the first distance and the second distance to an M-th value that is a difference between the first distance and the N-th distance; and
   determine the relative position based on the first value to the M-th value.

9. The system of anyone of claims 1-8, wherein the air mobility vehicle (100) is configured to:

   transmit a landing completion message to the service provider (300) and the airport device in response to a determination that the air mobility vehicle (100) has landed on the landing pad (280); and

move to a boarding field (290).

10. The system of claim 9, wherein the airport device is configured to control a towing vehicle (260) such that the air mobility vehicle (100) is moved to the boarding field (290) in response to the landing completion message being received and a request message requesting movement being received from the air mobility vehicle (100).

11. A method for controlling landing of an air mobility vehicle (100), the method comprising:

receiving a radio signal required to determine a relative position of the air mobility vehicle (100), the radio signal being sent in response to a signal indicating that landing on a landing pad (280) of an airport (200) is permitted; receiving the relative position of the air mobility vehicle (100); and transmitting a command for allowing the air mobility vehicle (100) to land vertically in response to a determination that the air mobility vehicle (100) is located within a predetermined range from the landing pad (280) based on the relative position of the air mobility vehicle (100).

12. The method of claim 11, further comprising:

receiving a signal requesting landing permission from the air mobility vehicle (100); and transmitting the signal indicating that landing on the landing pad (280) of the airport (200) is permitted in response to a determination that the air mobility vehicle (100) is capable of landing based on information of the air mobility vehicle (100).

13. The method of claim 12, further comprising:

after transmitting the signal indicating that landing on the landing pad (280) of the airport (200) is permitted, requesting a determination of whether the landing pad (280) is available from an airport device; and receiving a result of determination of whether the landing pad (280) is available from the airport device.

14. The method of claim 13, further comprising requesting the relative position of the air mobility vehicle (100) with respect to the landing pad (280) from the airport device in response to the result of the determination of whether the landing pad (280) is available being that the landing pad (280) is available.

15. The method of anyone of claims 11-14, wherein the radio signal is received by a plurality of receivers (N receivers).

**Patentansprüche**

1. System, aufweisend:

ein Luftmobilitätsfahrzeug (100), das konfiguriert ist zum Senden eines Funksignals, das zum Ermitteln einer relativen Position des Luftmobilitätsfahrzeugs (100) erforderlich ist, als Reaktion auf das Empfangen eines Signals, das anzeigt, dass eine Landung auf einem Landeplatz (280) erlaubt ist, eine Flughafeneinrichtung, die konfiguriert ist zum Empfangen des Funksignals, Ermitteln der relativen Position des Luftmobilitätsfahrzeugs (100) und Senden der relativen Position, und einen Dienstleistungsanbieter (300), der konfiguriert ist zum Senden des Signals, das die Erlaubnis zur Landung auf dem Landeplatz (280) anzeigt, und Senden eines Befehls zum Erlauben einer vertikalen Landung des Luftmobilitätsfahrzeugs (100) an das Luftmobilitätsfahrzeug (100), wenn basierend auf der relativen Position ermittelt wird, dass sich das Luftmobilitätsfahrzeug (100) innerhalb einer vorbestimmten Reichweite von dem Landeplatz (280) befindet.

2. System gemäß Anspruch 1, wobei der Dienstleistungsanbieter (300) konfiguriert ist zum:

Empfangen eines Signals, das eine Landeerlaubnis von dem Luftmobilitätsfahrzeug (100) anfordert, und Senden des Signals, das angibt, dass ein Landen auf dem Landeplatz (280) erlaubt ist, an das Luftmobilitätsfahrzeug (100) als Reaktion auf ein Ermitteln, dass das Luftmobilitätsfahrzeug (100) zum Landen in der Lage ist, basierend auf Informationen des Luftmobilitätsfahrzeugs (100).

3. System gemäß Anspruch 2, wobei der Dienstleistungsanbieter (300) konfiguriert ist zum:

Anfordern eines Ermittelns, ob der Landeplatz (280) verfügbar ist, von der Flughafeneinrichtung nach dem Senden des Signals, das angibt, dass eine Landung erlaubt ist, an das Luftmobilitätsfahrzeug (100), und Empfangen eines Ergebnisses des Ermittelns, ob der Landeplatz (280) verfügbar ist, von der Flughafeneinrichtung.

4.  System gemäß Anspruch 3, wobei der Dienstleistungsanbieter (300) konfiguriert ist zum Anfordern der relativen Position des Luftmobilitätsfahrzeugs (100) in Bezug auf den Landeplatz (280) von der Flughafeneinrichtung, als Reaktion darauf, dass das Ergebnis des Ermittelns ist, dass der Landeplatz (280) verfügbar ist.

5.  System gemäß irgendeinem der Ansprüche 1 bis 4, wobei die Flughafeneinrichtung eine Mehrzahl von Empfängern (N Empfänger) aufweist, die jeweils zum Empfangen des Funksignals konfiguriert sind.

6.  System gemäß Anspruch 5, wobei die Flughafeneinrichtung konfiguriert ist zum Festlegen von einem aus der Mehrzahl von Empfängern (N Empfängern) als Referenzempfänger und zum Berechnen einer ersten Entfernung zwischen dem Referenzempfänger und dem Luftmobilitätsfahrzeug (100) .

7.  System gemäß Anspruch 6, wobei die Flughafeneinrichtung konfiguriert ist zum Berechnen einer zweiten Entfernung bis zu einer N-ten Entfernung, die jeweils mit Entfernungen zwischen dem Luftmobilitätsfahrzeug (100) und den Empfängern außer dem Referenzempfänger unter der Mehrzahl von Empfängern (N Empfängern) korrespondiert.

8.  System gemäß Anspruch 7, wobei die Flughafeneinrichtung konfiguriert ist zum:

    Berechnen eines ersten Wertes, der eine Differenz zwischen der ersten Entfernung und der zweiten Entfernung ist, bis zu einem M-ten Wert, der eine Differenz zwischen der ersten Entfernung und der N-ten Entfernung ist, und Ermitteln der relativen Position basierend auf dem ersten Wert bis zu dem M-ten Wert.

9.  System gemäß irgendeinem der Ansprüche 1 bis 8, wobei das Luftmobilitätsfahrzeug (100) konfiguriert ist zum:

    Senden einer Landungsbeendigungsnachricht an den Dienstleistungsanbieter (300) und die Flughafeneinrichtung als Reaktion auf ein Ermitteln, dass das Luftmobilitätsfahrzeug (100) auf dem Landeplatz (280) gelandet ist, und
    Bewegen zu einem Einstiegsfeld (290).

10. System gemäß Anspruch 9, wobei die Flughafeneinrichtung konfiguriert ist zum Steuern eines Zugfahrzeuges (260), so dass das Luftmobilitätsfahrzeug (100) zum Einstiegsfeld (290) bewegt wird, als Reaktion auf das Empfangen der Landungsbeendigungsnachricht und das Empfangen einer Anforderungsnachricht, die eine Bewegung anfordert, von dem Luftmobilitätsfahrzeug (100).

11. Verfahren zum Steuern einer Landung eines Luftmobilitätsfahrzeugs (100), wobei das Verfahren aufweist:

    Empfangen eines Funksignals, das zum Ermitteln einer relativen Position des Luftmobilitätsfahrzeugs (100) erforderlich ist, wobei das Funksignal als Reaktion auf ein Signal gesendet wird, das anzeigt, dass eine Landung auf einem Landeplatz (280) eines Flughafens (200) erlaubt ist,
    Empfangen der relativen Position des Luftmobilitätsfahrzeugs (100) und
    Senden eines Befehls zum Erlauben eines vertikalen Landens des Luftmobilitätsfahrzeugs (100) als Reaktion auf ein Ermitteln, dass sich das Luftmobilitätsfahrzeug (100) innerhalb einer vorbestimmten Reichweite von dem Landeplatz (280) befindet, basierend auf der relativen Position des Luftmobilitätsfahrzeugs (100).

12. Verfahren gemäß Anspruch 11, ferner aufweisend:

    Empfangen eines Signals, das eine Landeerlaubnis anfordert, vom Luftmobilitätsfahrzeug (100), und
    Senden des Signals, das anzeigt, dass eine Landung auf dem Landeplatz (280) des Flughafens (200) erlaubt ist, als Reaktion auf ein Ermitteln, dass das Luftmobilitätsfahrzeug (100) zum Landen in der Lage ist, basierend auf Informationen des Luftmobilitätsfahrzeugs (100).

13. Verfahren gemäß Anspruch 12, ferner aufweisend:

    nach dem Senden des Signals, das anzeigt, dass ein Landen auf dem Landeplatz (280) des Flughafens (200) erlaubt ist, Anfordern eines Ermittelns, ob der Landeplatz (280) verfügbar ist, von einer Flughafeneinrichtung, und

Empfangen eines Ergebnisses des Ermittelns, ob der Landeplatz (280) verfügbar ist, von der Flughafeneinrichtung.

14. Verfahren gemäß Anspruch 13, ferner aufweisend das Anfordern der relativen Position des Luftmobilitätsfahrzeugs (100) in Bezug auf den Landeplatz (280) von der Flughafeneinrichtung als Reaktion darauf, dass das Ergebnis des Ermittelns, ob der Landeplatz (280) verfügbar ist, ist, dass der Landeplatz (280) verfügbar ist.

15. Verfahren gemäß irgendeinem der Ansprüche 11 bis 14, wobei das Funksignal von einer Mehrzahl von Empfängern (N Empfängern) empfangen wird.

**Revendications**

1. Système, comprenant :

un véhicule de mobilité aérienne (100) configuré pour transmettre un signal radio nécessaire pour déterminer une position relative du véhicule de mobilité aérienne (100) en réponse à la réception d'un signal indiquant qu'un atterrissage sur un terrain d'atterrissage (280) est autorisé ;
un dispositif d'aéroport configuré pour recevoir le signal radio, déterminer la position relative du véhicule de mobilité aérienne (100) et transmettre la position relative ; et
un fournisseur de services (300) configuré pour transmettre le signal indiquant l'autorisation d'atterrir sur le terrain d'atterrissage (280) et transmettre au véhicule de mobilité aérienne (100) une commande permettant au véhicule de mobilité aérienne (100) d'atterrir verticalement lorsqu'il est déterminé que le véhicule de mobilité aérienne (100) se trouve dans une plage prédéterminée par rapport au terrain d'atterrissage (280) sur la base de la position relative.

2. Système selon la revendication 1, dans lequel le fournisseur de services (300) est configuré pour :

recevoir un signal demandant une autorisation d'atterrir provenant du véhicule de mobilité aérienne (100) ; et
transmettre le signal indiquant qu'un atterrissage sur le terrain d'atterrissage (280) est autorisé au véhicule de mobilité aérienne (100) en réponse à une détermination selon laquelle le véhicule de mobilité aérienne (100) est capable d'atterrir sur la base d'informations du véhicule de mobilité aérienne (100).

3. Système selon la revendication 2, dans lequel le fournisseur de services (300) est configuré pour :

demander au dispositif d'aéroport de déterminer si le terrain d'atterrissage (280) est disponible après avoir transmis au véhicule de mobilité aérienne (100) le signal indiquant qu'un atterrissage est autorisé ; et
recevoir du dispositif d'aéroport un résultat de détermination si le terrain d'atterrissage (280) est disponible.

4. Système selon la revendication 3, dans lequel le fournisseur de services (300) est configuré pour demander la position relative du véhicule de mobilité aérienne (100) par rapport au terrain d'atterrissage (280) au dispositif d'aéroport en réponse au résultat de la détermination étant que le terrain d'atterrissage (280) est disponible.

5. Système selon l'une quelconque des revendications 1 à 4, dans lequel le dispositif d'aéroport comprend une pluralité de récepteurs (N récepteurs) chacun configuré pour recevoir le signal radio.

6. Système selon la revendication 5, dans lequel le dispositif d'aéroport est configuré pour définir l'un parmi la pluralité de récepteurs (N récepteurs) comme récepteur de référence et pour calculer une première distance entre le récepteur de référence et le véhicule de mobilité aérienne (100) .

7. Système selon la revendication 6, dans lequel le dispositif d'aéroport est configuré pour calculer une deuxième distance jusqu'à une N-ième distance correspondant respectivement à des distances entre le véhicule de mobilité aérienne (100) et les récepteurs autres que le récepteur de référence parmi la pluralité de récepteurs (N récepteurs).

8. Système selon la revendication 7, dans lequel le dispositif d'aéroport est configuré pour :

calculer une première valeur qui est une différence entre la première distance et la deuxième distance à une M-ième valeur qui est une différence entre la première distance et la N-ième distance ; et
déterminer la position relative sur la base de la première valeur à la M-ième valeur.

9. Système selon l'une quelconque des revendications 1 à 8, dans lequel le véhicule de mobilité aérienne (100) est configuré pour :

transmettre un message de terminaison d'atterrissage au fournisseur de services (300) et au dispositif d'aéroport en réponse à une détermination selon laquelle le véhicule de mobilité aérienne (100) a atterri sur le terrain d'atterrissage (280) ; et
se déplacer vers une aire d'embarquement (290).

10. Système selon la revendication 9, dans lequel le dispositif d'aéroport est configuré pour contrôler un véhicule de remorquage (260) de telle sorte que le véhicule de mobilité aérienne (100) soit déplacé vers l'aire d'embarquement (290) en réponse à la réception du message de terminaison d'atterrissage et à la réception d'un message de demande demandant un déplacement provenant du véhicule de mobilité aérienne (100).

11. Procédé pour contrôler un atterrissage d'un véhicule de mobilité aérienne (100), le procédé comprenant :

la réception d'un signal radio nécessaire pour déterminer une position relative du véhicule de mobilité aérienne (100), le signal radio étant envoyé en réponse à un signal indiquant qu'un atterrissage sur un terrain d'atterrissage (280) d'un aéroport (200) est autorisé ;
la réception de la position relative du véhicule de mobilité aérienne (100) ; et
la transmission d'une commande pour permettre au véhicule de mobilité aérienne (100) d'atterrir verticalement en réponse à une détermination selon laquelle le véhicule de mobilité aérienne (100) se trouve dans une plage prédéterminée par rapport au terrain d'atterrissage (280) sur la base de la position relative du véhicule de mobilité aérienne (100).

12. Procédé selon la revendication 11, comprenant en outre :

la réception d'un signal demandant une autorisation d'atterrir provenant du véhicule de mobilité aérienne (100) ; et
la transmission du signal indiquant qu'un atterrissage sur le terrain d'atterrissage (280) de l'aéroport (200) est autorisé en réponse à une détermination selon laquelle le véhicule de mobilité aérienne (100) est capable d'atterrir sur la base d'informations du véhicule de mobilité aérienne (100).

13. Procédé selon la revendication 12, comprenant en outre :

après la transmission du signal indiquant qu'un atterrissage sur le terrain d'atterrissage (280) de l'aéroport (200) est autorisé, la demande d'une détermination si le terrain d'atterrissage (280) est disponible, à un dispositif d'aéroport ; et
la réception d'un résultat de détermination de si le terrain d'atterrissage (280) est disponible provenant du dispositif d'aéroport.

14. Procédé selon la revendication 13, comprenant en outre la demande de la position relative du véhicule de mobilité aérienne (100) par rapport au terrain d'atterrissage (280) auprès du dispositif d'aéroport en réponse au résultat de détermination si le terrain d'atterrissage (280) est disponible étant que le terrain d'atterrissage (280) est disponible.

15. Procédé selon l'une quelconque des revendications 11 à 14, dans lequel le signal radio est reçu par une pluralité de récepteurs (N récepteurs).

400

```
┌─────────────────────┐
│  SERVICE PROVIDER   │
│         300         │
└─────────────────────┘
```

```
┌─────────────────┐          ┌─────────────────┐
│  AIR MOBILITY   │          │    AIRPORT      │
│    VEHICLE      │          │      200        │
│      100        │          │                 │
└─────────────────┘          └─────────────────┘
```

FIG.1

FIG.2

100

| | | |
|---|---|---|
| COMMUNICATION DEVICE 110 | | SENSOR 130 |
| | | POSITION ACQUISITION DEVICE 140 |
| | CONTROLLER 170 | THRUST DEVICE 150 |
| RADIO WAVE TRANSMITTER 120 | | FLIGHT CONTROL SURFACE 160 |

FIG.3

200

| FIRST RECEIVER 210 | ←→ | |
|---|---|---|
| SECOND RECEIVER 220 | ←→ | |
| THIRD RECEIVER 230 | ←→ | CONTROLLER 270 |
| ⋮ | | |
| n-TH RECEIVER 240 | ←→ | |
| COMMUNICATION DEVICE 250 | ←→ | |
| TOWING VEHICLE 260 | ←→ | |

FIG.4

200

280

260

TOWING VEHICLE

100

290

250

280

FIG.5

FIG.6

300

| COMMUNICATION DEVICE 310 | | CONTROLLER 330 | | STORAGE 320 |
|---|---|---|---|---|
| | ←→ | | ←→ | |

FIG.7

```
                    ┌─────────────┐
                    │    START    │
                    └──────┬──────┘
                           │ ◄──────────────────────────────┐
                           ▼                                 │
         ┌──────────────────────────────────┐               │
         │  APPROACH LANDING PAD BASED ON    │─S110          │
         │  SATELLITE NAVIGATION INFORMATION │               │
         └──────────────────┬───────────────┘               │
                            ▼                                │
         ┌──────────────────────────────────┐               │
         │     REQUEST LANDING PERMISSION    │─S120          │
         └──────────────────┬───────────────┘               │
                            ▼                                │
                       S130                                  │
                   ◇───────────◇         ┌──────────────┐    │
              IS SIGNAL                   │              │    │
         INDICATING THAT LANDING IS  NO   │ RE-IDENTIFY  │─S140
          PERMITTED RECEIVED?     ───────►│ LANDING PAD  │────┘
                   ◇───────────◇         └──────────────┘
                        │ YES
                        ▼
         ┌──────────────────────────────────┐
         │       TRANSMIT RADIO SIGNAL       │─S150
         └──────────────────┬───────────────┘
                            ▼ ◄──────────────────────┐
         ┌──────────────────────────────────┐        │
         │  RECEIVE CONTROL COMMAND FROM     │        │
         │  SERVICE PROVIDER DURING LANDING  │─S160    │
         │       AND ADJUST POSITION         │        │
         └──────────────────┬───────────────┘        │
                            ▼                         │
                       S170                           │
                   ◇───────────◇      NO              │
              IS LANDING POSSIBLE? ───────────────────┘
                   ◇───────────◇
                        │ YES
                        ▼
         ┌──────────────────────────────────┐
         │          LAND VERTICALLY          │─S180
         └──────────────────┬───────────────┘
                            ▼
                       S190
                   ◇───────────◇
              ARE WHEELS IN
         CONTACT WITH GROUND?   NO ─────────────┐
                   ◇───────────◇                │
                        │ YES                    │ (to S160)
                        ▼
         ┌──────────────────────────────────┐
         │ TRANSMIT LANDING COMPLETION SIGNAL│─S200
         └──────────────────┬───────────────┘
                            ▼
         ┌──────────────────────────────────┐
         │    CONTROL MOVEMENT ON GROUND     │─S210
         └──────────────────┬───────────────┘
                            ▼
                    ┌─────────────┐
                    │     END     │
                    └─────────────┘
```

FIG.8

```
                        ┌─────────┐
                        │  START  │
                        └────┬────┘
                             │
                             ▼
          ┌──────────────────────────────────────┐
          │   RECEIVE SIGNAL INDICATING THAT      │ ─── S310
          │      LADING IS PERMITTED              │
          └──────────────────┬───────────────────┘
                             │                                                S320
    ┌────────────────────────┼──────────────────────┐              ┌──────────────────────────────┐
    │                        ▼                       │         NO   │      TRANSMIT SIGNAL         │
    │             ◇  IS LANDING PAD  ◇───────────────────────────▶  │  INDICATING THAT LANDING     │ ─ S330
    │                  AVAILABLE?                                    │    PAD IS UNAVAILABLE        │
    │                        │                                       └──────────────┬──────────────┘
    │                      YES                                                       │
    │                        ▼                                                       │
    │          ┌──────────────────────────────────────┐                             │
    │          │   TRANSMIT SIGNAL INDICATING THAT     │ ─── S340                    │
    │          │      LANDING PAD IS AVAILABLE         │                             │
    │          └──────────────────┬───────────────────┘                             │
    │                             ▼                                                   │
    │          ┌──────────────────────────────────────┐                             │
    │          │        RECEIVE RADIO SIGNAL           │ ─── S350                    │
    │          └──────────────────┬───────────────────┘                             │
    │                             ▼                                                   │
    │          ┌──────────────────────────────────────┐                             │
    │          │   DETERMINE RELATIVE POSITION OF      │ ─── S360                    │
    │          │       AIR MOBILITY VEHICLE            │                             │
    │          └──────────────────┬───────────────────┘                             │
    │                             ▼                                                   │
    │          ┌──────────────────────────────────────┐                             │
    │          │   TRANSMIT RELATIVE POSITION TO       │ ─── S370                    │
    │          │         SERVICE PROVIDER              │                             │
    │          └──────────────────┬───────────────────┘                             │
    │                             ▼                          S380                     │
    │   NO                ◇   IS LANDING   ◇                                          │
    └─────────────   COMPLETION MESSAGE   ◇                                          │
                           RECEIVED?                                                  │
                             │                                                         │
                           YES                                                         │
                             ▼                                                         │
          ┌──────────────────────────────────────┐                                    │
          │   SUPPORT GROUND MOVEMENT OF          │ ─── S390                           │
          │       AIR MOBILITY VEHICLE            │                                    │
          └──────────────────┬───────────────────┘
                             ▼
                        ┌─────────┐
                        │   END   │
                        └─────────┘
```

FIG.9

FIG.10

```
┌─────────────────────┐      ┌─────────────────────┐      ┌─────────────────────┐
│ AIR MOBILITY VEHICLE│      │  SERVICE PROVIDER   │      │      AIRPORT        │
│         100         │      │         300         │      │         200         │
└─────────────────────┘      └─────────────────────┘      └─────────────────────┘
```

S610 — TRANSMIT SIGNAL REQUESTING LANDING PERMISSION

TRANSMIT SIGNAL INDICATING THAT LANDING IS HARD(S630)

S620 — IS AIR MOBILITY VEHICLE ABLE TO LAND?

NO

YES

S650 — RECEIVE SIGNAL INDICATING THAT LANDING OF AIR MOBILITY VEHICLE IS PERMITTED

S640 — TRANSMIT SIGNAL INDICATING LANDING OF AIR MOBILITY VEHICLE IS PERMITTED

S660 — REQUEST AIRPORT TO DETERMINE WHETHER LANDING PAD IS AVAILABLE

TRANSMIT SIGNAL INDICATING THAT LANDING PAD IS UNAVAILABLE (S680)

S670 — IS LANDING PAD AVAILABLE?

NO

YES

S690 — TRANSMIT SIGNAL INDICATING THAT LANDING PAD IS AVAILABLE

S700 — TRANSMIT RADIO SIGNAL

S710 — RECEIVE RADIO SIGNAL

S720 — REQUEST INFORMATION ON A RELATIVE POSITION OF THE AIR MOBILITY VEHICLE WITH RESPECT TO THE LANDING PAD TO THE AIRPORT

S730 — DETERMINE RELATIVE POSITION OF AIR MOBILITY VEHICLE

TRANSMIT CONTROL COMMAND AND POSITION ADJUSTMENT COMMAND(S760)

S750 — IS AIR MOBILITY VEHICLE LOCATED IN PREDETERMINED RANGE?

NO

S740 — TRANSMIT RESULT OF DETERMINATION OF RELATIVE POSITION

YES

S770 — TRANSMIT COMMAND FOR ALLOWING AIR MOBILITY VEHICLE TO LAND

S780 — LAND

S790 — TRANSMIT LANDING COMPLETION MESSAGE

S800 — MOVE ON GROUND

S810 — SUPPORT GROUND MOVEMENT OF AIR MOBILITY VEHICLE

END        END        END

FIG.11

1000

1300
MEMORY
1310    1320
ROM     RAM

1100
PROCESSOR

1400
USER INTERFACE
INPUT DEVICE

1500
USER INTERFACE
OUTPUT DEVICE

1200

1600
STORAGE

1700
NETWORK
INTERFACE

FIG.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220180757
- CN 114721441 A
- CN 113920784 A
- KR 20190110499 A

**Non-patent literature cited in the description**

- **WADE H. FOY**. Position-Location Solutions by Taylor-Series Estimation. *IEEE Transaction on Aerospace and Electronics Systems*, 1976, vol. AES-12 (2)